# FASCICULE DE BREVET EUROPEEN

(11) **EP 2 576 282 B1**
(45) Date de publication et mention de la délivrance du brevet: **07.06.2017**
(21) Numéro de dépôt: 11728323.4
(22) Date de dépôt: 30.05.2011
(51) Int. Cl.: B60M 1/20

(54) **ARMEMENT CATÉNAIRE**
OBERLEITUNGSVERANKERUNG
CATENARY BRACING

(30) Priorité: 01.06.2010 FR 1054242
(43) Date de publication de la demande: 10.04.2013
(73) Titulaire: SNCF RESEAU, 93418 La Plaine Saint-Denis CEDEX (FR); Stratiforme Industries, 59235 Bersee (FR)
(72) Inventeur: MENTEL, Jean-Paul, F-78710 Rosny S/seine (FR); BOBILLOT, Adrien, F-75011 Paris (FR); LEBLON, Guy, F-59283 Raimbeaucourt (FR); MARHEM, Vincent, F-62217 Beaurains (FR)
(74) Mandataire: Jouanneau, Lionel
(86) Numéro de dépôt international: PCT/FR2011/051229
(87) Numéro de publication internationale: WO 2011/151583

(56) Documents cités:
- EP-A1- 0 164 284
- CH-A- 358 110
- DE-A1-102007 024 155
- DE-U1- 9 010 747
- GB-A- 1 326 092
- US-A- 3 889 788

## Description

La présente invention se rapporte à un armement caténaire pour ligne d'alimentation électrique ferroviaire.

Une caténaire est un ensemble de câbles, porteurs et conducteurs, destinés à l'alimentation des trains électriques par captage de courant.

La caténaire est supportée par une série de poteaux par l'intermédiaire d'un armement présentant une forme de bras et s'étendant au dessus de la voie ferrée de manière à ce que la caténaire puisse être atteinte par un pantographe d'une locomotive.

La caténaire attachée sur son armement comprend généralement un câble porteur, un câble conducteur appelé fil de contact et permettant le contact avec le pantographe, un ensemble de câbles verticaux tendus entre le câble porteur et le fil de contact de manière à assurer la linéarité de ce dernier.

Il convient de noter qu'il existe des caténaires sans câble porteur.

L'armement de la caténaire comprend généralement, une console supportant la caténaire, un hauban de console servant plus particulièrement à en régler la hauteur, un antibalançant lié à la console et visant à empêcher toute inclinaison de la caténaire, cet antibalançant étant terminé par un bras de rappel lié au fil de contact.

Plus précisément, le bras de rappel est réglable sur l'antibalançant et permet d'imprimer au fil de contact une forme en zig-zag entre les poteaux, notamment en l'orientant à gauche ou à droite du fil de contact.

En effet, afin que le fil de contact ne frotte pas toujours au même endroit sur un archet du pantographe, le fil contact est installé non pas en ligne droite mais en zig-zag.

Il résulte de cette forme en zig-zag que le fil contact exerce sur l'armement caténaire, et plus précisément au niveau de l'antibalançant par le biais du bras de rappel, un ensemble de forces de rappel de direction antagonistes entre deux poteaux successifs. Le bras de rappel sert à équilibrer ces forces.

L'isolation électrique de l'armement caténaire est assurée par la mise en place d'isolateurs au niveau notamment du pied de console et du hauban de console, et plus généralement avant toute liaison au poteau.

Par ailleurs, la caténaire exerce également son poids sur l'armement qui le supporte.

On comprend donc que l'armement caténaire est soumis à de nombreuses forces et doit donc posséder une résistance suffisante correspondante.

Actuellement, la plupart des armements caténaires sont réalisés à partir de tubes d'acier conférant une tenue mécanique suffisante à l'ensemble. Ces derniers étant conducteurs, des isolateurs doivent être rajoutés avant leur rattachement au poteau.

Il existe donc un besoin pour un armement caténaire plus léger, isolant, et résistant.

La présente invention vise à pallier ces inconvénients et concerne pour ce faire un armement caténaire conforme à la revendication 1.

Ainsi, la réalisation de la console dans un matériau composite isolant permet de fusionner les fonctions mécaniques et électriques (isolation), et par voie de conséquence de réduire le nombre de pièces nécessaires. Il en résulte un montage et une maintenance simplifiée ainsi qu'une industrialisation facilitée de la console et plus généralement de l'armement caténaire.

Avantageusement, l'armement comprend au moins un hauban présentant une première extrémité fixée dans la console et une deuxième extrémité destinée à être rattachée au support.

De manière préférentielle, le matériau composite comprend des fibres de verre.

Selon une première variante de réalisation, le matériau composite comprend une matrice de type résine epoxy.

Selon une deuxième variante de réalisation, le matériau composite comprend une matrice de type vinylester.

Avantageusement, le matériau composite est recouvert d'un revêtement de surface, notamment revêtement silicone ou écailles de mica.

De manière avantageuse, l'armement caténaire comprend un bras secondaire monté sur la console et apte à recevoir un bras de rappel. Le bras secondaire est également réalisé à partir d'un matériau composite, de préférence identique à celui de la console.

De manière avantageuse, le bras secondaire est symétrisable sur la console. Plus précisément, le bras secondaire est orientable d'un côté droit ou gauche de la console, cette symétrisation étant, comme expliqué précédemment, destinée à permettre au bras secondaire de compenser les forces de rappel exercées par le fil de contact.

Avantageusement, le bras secondaire est monté réglable selon une direction sensiblement longitudinale de la console. La console et le bras secondaire sont monobloc.

De manière avantageuse, la console est équipée de moyens de liaison directs au support. Les moyens de liaison pourront notamment se présenter sous la forme d'une platine de fixation intégrée dans le matériau composite.

Conformément à la revendication 1, les fibres du matériau composites de la console, et, le cas échéant du bras secondaire, sont disposées selon une pluralité d'orientations différentes, par exemple, selon une direction sensiblement longitudinale et selon une direction transversale de la console.

Conformément à la revendication 1, la console et le bras secondaire, a une section transverse, creuse, en U. Une telle forme représente un compromis, solidité / masse / quantité de matière intéressant.

De manière avantageusement complémentaire, le matériau composite comprend, au moins partiellement, une ou plusieurs âmes, notamment en mousse ou matériau alvéolaire. Ces âmes permettront éventuellement de renforcer la structure composite localement si nécessaire ou sur une longueur plus importante.

On notera également de manière complémentaire que l'armement caténaire selon l'invention poura avantageusement être réalisé à partir d'empilement de plis fibreux, notamment des plis pré imprégnés. Le procédé de fabrication utilisé pourra également avantageusement être un procédé de moulage par transfert de résine, connu sous l'acronyme RTM, et plus particulièrement un procédé d'infusion de résine, procédé dans lequel le contre moule utilisé est une bâche souple, notamment plastique.

La présente invention sera mieux comprise à la lumière de la description détaillée qui suit en regard du dessin annexé dans lequel :
- la figure 1 est une représentation schématique d'un armement caténaire selon l'invention monté sur un poteau support et soutenant une caténaire à câble porteur et fil de contact,
- la figure 2 est une représentation schématique de l'armement caténaire de la figure 1 avec un bras secondaire orienté de l'autre côté.

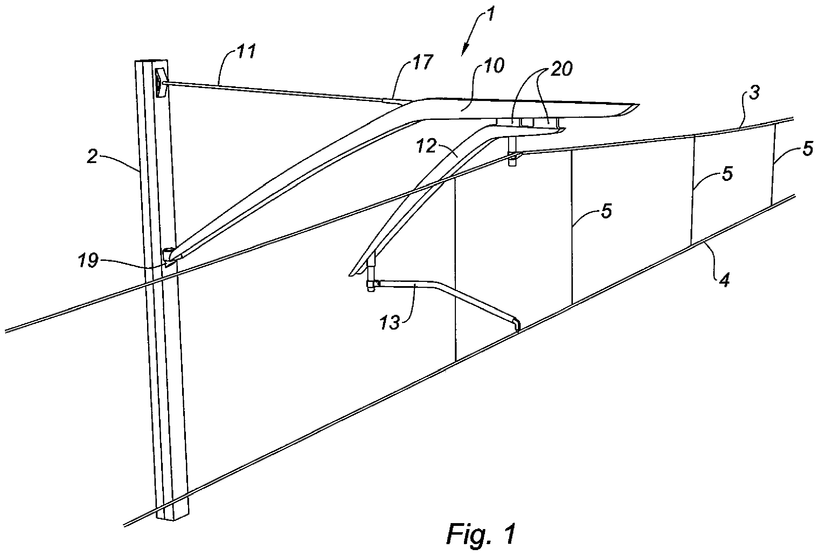

La figure 1 montre un armement caténaire 1 selon l'invention monté sur un poteau support 2 et support une caténaire comprenant un câble support 3 et un fil de contact 4 retenu par des suspendes 5.

L'armement de la caténaire comprend, une console 10 formant bras, un hauban 11 de console servant plus particulièrement à en régler la hauteur, un antibalançant 12 formant un bras secondaire et lié à la console 10 de manière réglable et symétrisable, cet antibalançant 12 étant terminé par un bras de rappel 13 lié au fil de contact.

Conformément à l'invention, la console 10 et le bras secondaire 12 sont réalisés en matériau composite chacun d'une seule pièce, par moulage par transfert de résine.

Le matériau composite préférentiellement utilisé est un ensemble de fibres de verre dans une matrice de résine époxy ou vinylester.

Chaque pièce 10, 12 est ensuite recouverte d'une couche de protection en silicone ou en écaillles de mica, par exemple.

La console 10 et le bras secondaire 12 présente une forme générale en U inversé.

En fonction des besoins en termes de résistance et / ou d'encombrement, on pourra prévoir, localement ou sur des longeurs plus importantes l'insertion d'âme dans le matériau composite, notamment des âmes en mousse, par exemple, disposées au niveau des branches du U.

Bien évidemment, d'autres formes peuvent être envisagées en fonction des besoins, notamment des formes de section pleine ou monolithique, ou des formes de section creuse ou à âme, notamment en mousse ou alvéolaire, par exemple.

Le hauban 11 pourra être, entre autres, un hauban pultrudé, dont un point d'ancrage 17 à la console 10 pourra être moulé avec cette dernière, ou être rattaché à la console par l'intermédiaire d'un système d'attache, en l'espèce un crochet 18 prévu à cet effet. Au niveau du poteau support 2, le hauban pourra être attaché selon des moyens conventionnels usuels.

La fixation de la console 10 dans le poteau support 2 s'effectue directement dans ce dernier, c'est-à-dire sans nécessiter d'isolateur intermédiaire, à l'aide de moyens de fixation conventionnels usuels, notamment en prévoyant une platine de fixation 19, par exemple, intégrée dans le matériau composite de la console 10.

La fixation et le positionnement du bras secondaire 12 dans la console 10 s'effectue par l'intermédiaire de pions de fixation 20 montés réglable en translation sur un rail (non visible) intégré à la console. Les pions de fixation 20 sont maintenus en position par serrage sur le rail. D'autres systèmes de réglage longitudinal de la position du bras secondaire 12 peuvent bien évidemment être envisagés.

Des moyens de réglage vertical du bras secondaire 12 pourront également être prévus.

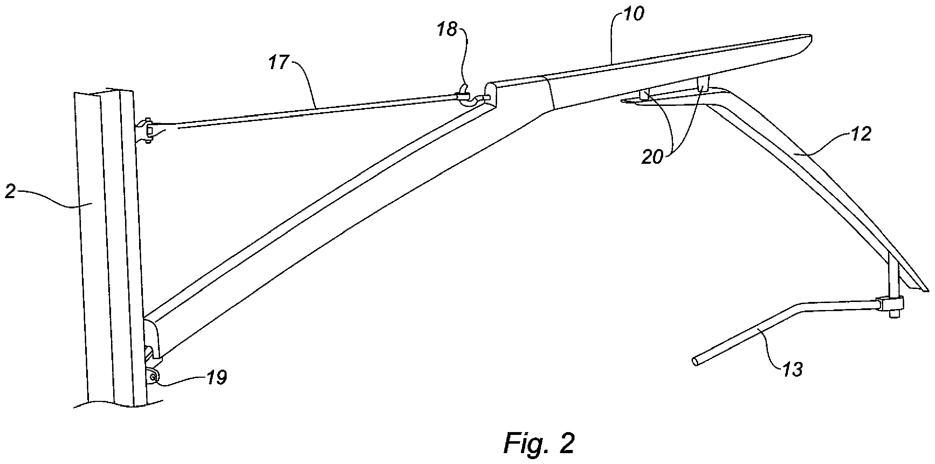

On notera que ces pions de fixation 20 sont réversibles et permettent le retournement du bras secondaire 12 (figure 2).

Concernant la fabrication de la console 10 et le bras secondaire 12 en matériau composite, ceux-ci pourront être fabriqués par moulage par transfert de résine, ou RTM ou encore à l'aide de plis fibreux préimprégnés de résine.

Comme mentionné, et conformément à l'invention, on s'assurera avantageusement d'une orientation multiple des fibres afin d'assurer une tenue mécanique optimale dans plusieurs directions et non seulement une direction longitudinale de la console 10.

Le mode de réalisation décrit utilise un hauban lié à l'armement par crochet 18. On pourra bien évidemment utiliser tout autre mode d'attache possible, notamment un système de tendeur et plus particulièrement de tendeur à lanterne.

## Revendications

1. Armement caténaire (1) comprenant une console (10) réalisée à partir d'un matériau composite isolant et formant bras, présentant une première extrémité destinée à être rattachée à un support de type poteau (2), et une deuxième extrémité destinée à être rattachée à la caténaire (3, 4), **caractérisé en ce que** le matériau composite de la console comprend des fibres disposées selon une pluralité d'orientations différentes, par exemple selon une direction sensiblement longitudinale de la console (10) et selon une direction transversale de la console (10), **en ce qu'**il comprend un bras secondaire (12) monté sur la console (10) et apte à recevoir un bras de rappel (13), le bras secondaire (12) étant également réalisé à partir d'un matériau composite, de préférence identique à celui de la console (10), la console (10) et le bras secondaire (12) étant monobloc, et **en ce que** la console (10) et le bras secondaire (12) présentent une section transverse, creuse, en U inversé.

2. Armement caténaire (1) selon la revendication 1, **caractérisé en ce que** la console (10) est équipée de moyens de liaison directs (19) au support.

3. Armement caténaire (1) selon la revendication 2, **caractérisé en ce que** les moyens de liaison directs (19) au support incluent une platine de fixation intégrée dans le matériau composite de la console (10).

4. Armement caténaire (1) selon l'une des revendications 1 à 3, **caractérisé en ce qu'**il comprend au moins un hauban (11) présentant une première extrémité (17) fixée dans la console (1) et une deuxième extrémité destinée à être rattachée au support (2).

5. Armement caténaire (1) selon l'une quelconque des revendications 1 à 4, **caractérisé en ce que** le matériau composite comprend des fibres de verre.

6. Armement caténaire (1) selon l'une quelconque des revendications 1 à 5, **caractérisé en ce que** le matériau composite comprend une matrice de type résine époxy.

7. Armement caténaire (1) selon l'une quelconque des revendications 1 à 6, **caractérisé en ce que** le matériau composite comprend une matrice de type vinylester.

8. Armement caténaire (1) selon l'une quelconque des revendications 1 à 7, **caractérisé en ce que** le matériau composite est recouvert d'un revêtement de surface, notamment un revêtement en silicone ou en écailles de mica.

9. Armement caténaire (1) selon l'une quelconque des revendications 1 à 8, **caractérisé en ce que** le bras secondaire (12) est symétrisable sur la console (10).

10. Armement caténaire (1) selon l'une quelconque des revendications 1 à 9, **caractérisé en ce que** le bras secondaire (12) est monté réglable selon une direction sensiblement longitudinale de la console (10).

11. Armement caténaire (1) selon l'une quelconque des revendications 1 à 10, **caractérisé en ce que** le matériau composite comprend, au moins partiellement, une ou plusieurs âmes, notamment en mousse ou matériau alvéolaire.

## Patentansprüche

1. Oberleitungsverankerung (1), umfassend einen Kragträger (10), der aus einem isolierenden Verbundmaterial hergestellt ist und einen Arm bildet, der ein erstes Ende aufweist, das ausgelegt ist, um mit einer Stütze vom Typ Säule (2) verbunden zu sein, und ein zweites Ende, das ausgelegt ist, um mit der Oberleitung (3, 4) verbunden zu sein, **dadurch gekennzeichnet, dass** das Verbundmaterial des Kragträgers Fasern umfasst, die gemäß einer Vielzahl von verschiedenen Ausrichtungen angeordnet sind, z. B. gemäß einer im Wesentlichen Längsrichtung des Kragträgers (10) und gemäß einer Querrichtung des Kragträgers (10), dadurch, dass sie einen sekundären Arm (12) umfasst, der auf dem Kragträger (10) montiert und ausgelegt ist, um einen Rückzugsarm (13) aufzunehmen, wobei der sekundäre Arm (12) ebenfalls aus einem Verbundmaterial hergestellt ist, vorzugsweise identisch mit demjenigen des Kragträgers (10), wobei der Kragträger (10) und der sekundäre Arm (12) einstückig sind, und dadurch, dass der Kragträger (10) und der sekundäre Arm (12) einen hohlen, umgekehrt U-förmigen Querschnitt aufweisen.

2. Oberleitungsverankerung (1) nach Anspruch 1, **dadurch gekennzeichnet, dass** der Kragträger (10) mit direkten Verbindungsmitteln (19) an die Stütze ausgestattet ist.

3. Oberleitungsverankerung (1) nach Anspruch 2, **dadurch gekennzeichnet, dass** die direkten Verbindungsmittel (19) an die Stütze eine Befestigungsplatte umfassen, die in das Verbundmaterial des Kragträgers (10) integriert ist.

4. Oberleitungsverankerung (1) nach einem der Ansprüche 1 bis 3, **dadurch gekennzeichnet, dass** sie mindestens einen Spanndraht (11) umfasst, der ein erstes Ende (17) aufweist, das im Kragträger (1) fixiert ist, und ein zweites Ende, das ausgelegt ist, um mit der Stütze (2) verbunden zu sein.

5. Oberleitungsverankerung (1) nach einem der Ansprüche 1 bis 4, **dadurch gekennzeichnet, dass** das Verbundmaterial Glasfasern umfasst.

6. Oberleitungsverankerung (1) nach einem der Ansprüche 1 bis 5, **dadurch gekennzeichnet, dass** das Verbundmaterial eine Matrix vom Typ Epoxydharz umfasst.

7. Oberleitungsverankerung (1) nach einem der Ansprüche 1 bis 6, **dadurch gekennzeichnet, dass** das Verbundmaterial eine Matrix vom Typ Vinylester umfasst.

8. Oberleitungsverankerung (1) nach einem der Ansprüche 1 bis 7, **dadurch gekennzeichnet, dass** das Verbundmaterial mit einer Oberflächenbeschichtung bedeckt ist, insbesondere einer Beschichtung aus Silikon oder aus Glimmerschuppen.

9. Oberleitungsverankerung (1) nach einem der Ansprüche 1 bis 8, **dadurch gekennzeichnet, dass** der sekundäre Arm (12) auf dem Kragträger (10) symmetriert werden kann.

10. Oberleitungsverankerung (1) nach einem der Ansprüche 1 bis 9, **dadurch gekennzeichnet, dass** der sekundäre Arm (12) regulierbar gemäß einer im Wesentlichen Längsrichtung des Kragträgers (10) montiert ist

11. Oberleitungsverankerung (1) nach einem der Ansprüche 1 bis 10, **dadurch gekennzeichnet, dass** das Verbundmaterial mindestens teilweise einen oder mehrere Kerne umfasst, insbesondere aus Schaum oder Schaummaterial.

## Claims

1. A catenary setting (1) comprising a bracket (10) made of an insulating composite material and forming an arm, having a first end intended to be attached to a support of the stud type (2), and a second end intended to be attached to the catenary (3, 4), **characterized in that** the composite material of the bracket comprises fibers disposed in a plurality of different orientations, for example in a substantially longitudinal direction of the bracket (10) and in a direction transverse to the bracket (10), **in that** it comprises a secondary arm (12) mounted on the bracket (10) and adapted to receive a return arm (13), the secondary arm (12) also being made of a composite material, preferably identical to that of the bracket (10), the bracket (10) and the secondary arm (12) being in one piece, and **in that** the bracket (10) and the secondary arm (12) have an inverted u-shaped hollow cross-section.

2. The catenary setting (1) according to claim 1, **characterized in that** the bracket (10) is equipped with direct connecting means (19) to the support.

3. The catenary setting (1) according to claim 2, **characterized in that** the direct connecting means (19) to the support include a fastening plate integrated in the composite material of the bracket (10).

4. The catenary setting (1) according to any of claims 1 to 3, **characterized in that** it comprises at least one stay (11) having a first end (17) fastened in the bracket (1) and a second end intended to be attached to the support (2).

5. The catenary setting (1) according to any one of claims 1 to 4, **characterized in that** the composite material comprises glass fibers.

6. The catenary setting (1) according to any one of claims 1 to 5, **characterized in that** the composite material comprises an epoxy resin type matrix.

7. The catenary setting (1) according to any one of claims 1 to 6, **characterized in that** the composite material comprises a vinylester type matrix.

8. The catenary setting (1) according to any one of claims 1 to 7, **characterized in that** the composite material is covered with a surface coating, in particular a silicone or mica flake coating.

9. The catenary setting (1) according to any one of claims 1 to 8, **characterized in that** the secondary arm (12) can be symmetrized on the bracket (10).

10. The catenary setting (1) according to any one of claims 1 to 9, **characterized in that** the secondary arm (12) is adjustably mounted in a substantially longitudinal direction of the bracket (10).

11. The catenary setting (1) according to any one of claims 1 to 10, **characterized in that** the composite material comprises, at least partially, one or several core(s), in particular of made of foam or honeycomb material.
